# EUROPÄISCHE PATENTSCHRIFT

(11) **EP 1 806 507 B1**
(45) Veröffentlichungstag und Bekanntmachung des Hinweises auf die Patenterteilung: **06.05.2015**
(21) Anmeldenummer: 07100230.7
(22) Anmeldetag: 08.01.2007
(51) Int. Cl.: F16B 12/04, F16B 13/14

(54) **Verbindungsteil, Verfahren zur Herstellung von Verbindungen und Verbindungssystem**
Connection part, method for the production of connections and connecting system
Elément de connexion, procédé de production de connexions et système de connexion

(30) Priorität: 10.01.2006 DE 102006001224
(43) Veröffentlichungstag der Anmeldung: 11.07.2007
(73) Patentinhaber: HD Möbelzubehör GmbH, 32107 Bad Salzuflen (DE)
(72) Erfinder:
(74) Vertreter: Dantz, Jan Henning

(56) Entgegenhaltungen:
- DE-A1- 2 213 269
- DE-A1- 2 546 110
- DE-A1- 4 324 743
- DE-A1- 19 909 412
- DE-U1- 29 903 925
- US-A- 5 259 686

## Beschreibung

Die vorliegende Erfindung betrifft ein Verbindungsteil insbesondere für die Herstellung von Möbeln aus Holz oder Holzwerkstoffen, ein Verfahren zur Herstellung von Verbindungen sowie ein Verbindungssystem.

Es sind Verbindungselemente wie Holzdübel oder Holzplättchen bekannt, die zum Verbinden von Teilen aus Holz oder Holzwerkstoff eingesetzt werden. Hierfür wird in ein Bohrloch oder eine Ausfräsung zunächst Holzleim eingebracht und anschließend das Verbindungsteil in die Bohrung oder Ausfräsung eingefügt. Anschließend wird bei einem zweiten Werkstück mit einer Bohrung oder Ausfräsung, in die ebenfalls vorab Leim eingebracht wurde, der hervorstehende Teil des Verbindungselementes eingefügt. Nachteilig bei diesem bekannten Verfahren ist, dass die Leimdosierung schwierig ist und es zu Leimspuren an der sichtbaren Seite des Möbels kommen kann. Zudem kann austretender Leim die Maschine verschmutzen, was eine regelmäßige Reinigung der Einspritzsysteme erforderlich macht und zu längeren Stillstandszeiten führt. Schließlich benötigen die eingesetzten Holzleime relativ lange Abbindezeiten und dementsprechend besteht die Notwendigkeit, die Werkstücke vergleichsweise lang unter Pressdruck zu verbinden.

Aus der DE 299 03 925 ist zudem ein Holzverbindungsteil bekannt, bei dem ein wasserreaktivierbarer Leim vorab auf das Holzverbindungsteil aufgebracht wird und in die Bohrlöcher bzw. Ausfräsungen während des Produktionsprozesses nur noch Wasser eingefüllt wird. Dadurch erhält man eine über die Fläche gleichmäßige Dosierung des Leimes und verhindert einen Leimaustritt an der Oberfläche der Werkstücke. Allerdings sind auch hier die Abbindezeiten aufgrund des Einsatzes eines wasserreaktivierbaren Leimes vergleichsweise lang.

Es ist daher Aufgabe der vorliegenden Erfindung ein Verbindungsteil sowie ein Verfahren zur Herstellung von Verbindungen zu schaffen, das für eine schnelle Verbindung mit hoher Festigkeit sorgt.

Diese Aufgabe wird mit einer Verwendung eines Verbindungsteils mit dem Merkmal des Anspruches 1, mit einem Verfahren zur Herstellung von Verbindungen mit dem Merkmalen des Anspruches 6, sowie mit einem Verbindungssystem mit den Merkmalen des Anspruches 9 gelöst.

Erfindungsgemäß ist das Verbindungsteil zumindest teilweise mit einer getrockneten Härter/Katalysator-Komponente eines mehrkomponentigen Leimsystems beschichtet. Dadurch kann bei Aktivierung der Härter/Katalysator-Komponente an dem Verbindungsteil in vergleichsweise kurzer Zeit, meist schon nach 12 bis 15 Sekunden eine feste Klebeverbindung hergestellt werden. Bisherige Leimverbindungen haben die erforderliche Festigkeit erst nach 60 bis 180 Sekunden erreicht. Zudem ist die Klebekraft des mehrkomoponentigen Leimsystems erheblich höher als bei bekannten Leimverbindungen, so dass der Einsatz anderer Befestigungsmittel reduziert werden kann.

Vorzugsweise ist die Beschichtung des Verbindungsteiles bei Kontakt mit ein oder mehreren anderen Komponenten des Leimsystems chemisch aktivierbar, so dass sowohl die Aushärtungszeit als auch die Festigkeit im gewissen Maße von dem gewählten Leimsystem abhängt, wobei die chemische Reaktion den Aushärtungsprozess beschleunigt. Für eine gleichmäßige Reaktion ist das Verbindungsteil über die gesamte Oberfläche mit einer etwa gleichen Dicke überzogen.

Gemäß einer weiteren Ausgestaltung der Erfindung ist die Härter/Katalysator-Komponente mit einer sich von der Holzfarbe unterscheidenden Farbe eingefärbt. Dadurch kann der Monteur ohne weiteres erkennen, ob das Verbindungsteil mit der Härter/Katalysator-Komponente oder einer anderen Komponente beschichtet ist.

Das Verbindungsteil kann dabei als Holzdübel oder Holzplättchen ausgebildet sein, wobei auch andere Formen für das Verbindungsteil möglich sind.

Bei dem erfindungsgemäßen Verfahren wird zunächst eine wässrige Komponente eines mehrkomponentigen Leimsystems in eine Aufnahme eines Verbindungselementes injiziert. Dann wird ein mit einer getrockneten Härter/Katalysator-Komponente beschichtetes Verbindungsteil in die Aufnahme eingefügt, so dass sich die beiden Komponenten reaktiv verbinden können. Die hergestellte Verbindung wird dann noch ausgehärtet. Das Verbindungsteil kann natürlich in kurzer Abfolge mit zwei Verbindungselementen verbunden werden.

Vorzugsweise ist die wässrige Komponente in der Aufnahme so feucht, dass die Feuchtigkeit von der Beschichtung des Verbindungsteils aufgenommen wird und die chemische Reaktion eingeleitet werden kann. Bei der Reaktion des mehrkomponentigen Leimsystems findet vorzugsweise ein Aufquellen statt, so dass das Verbindungsteil zumindest teilweise klemmend in der Aufnahme des Verbindungselementes festgelegt wird.

Erfindungsgemäß wird auch ein Verbindungssystem, insbesondere für Möbel aus Holz oder Holzwerkstoffen bereitgestellt, bei dem ein Verbindungsteil und ein Verbindungselement zusammengefügt sind. Das Verbindungsteil ist dabei mit einer getrockneten Härter/Katalysator-Komponente beschichtet, während eine Aufnahme an dem Verbindungselement eine andere Komponente als die Härter/Katalysator-Komponente enthält, beispielsweise einen wässrigen Harnstoff/Formaldehyd/Klebstoff, der dann mit der Härter/Katalysator-Komponente reagiert. Das Verbindungselement ist dabei vorzugsweise als Möbelplatte ausgebildet.

Die Erfindung wird nachfolgend anhand zweier Ausführungsbeispiele mit Bezug auf die beigefügten Zeichnungen erläutert. Es zeigen:
- Figur 1: eine perspektivische Ansicht eines erfindungsgemäßen Verbindungssystems mit Holzdübeln;
- Figur 2: eine geschnittene Ansicht des Holzdübels der Figur 1;
- Figur 3: eine perspektivische Ansicht einer Stoßverbindung zwischen zwei Möbelplatten;
- Figur 4: eine Detailansicht eines Holzplättchens für das Verbindungssystem der Figur 3, und
- Figur 5: eine schematische Ansicht einer Gehrungsecke zwischen zwei über ein Holzplättchen verbundenen Holzleisten.

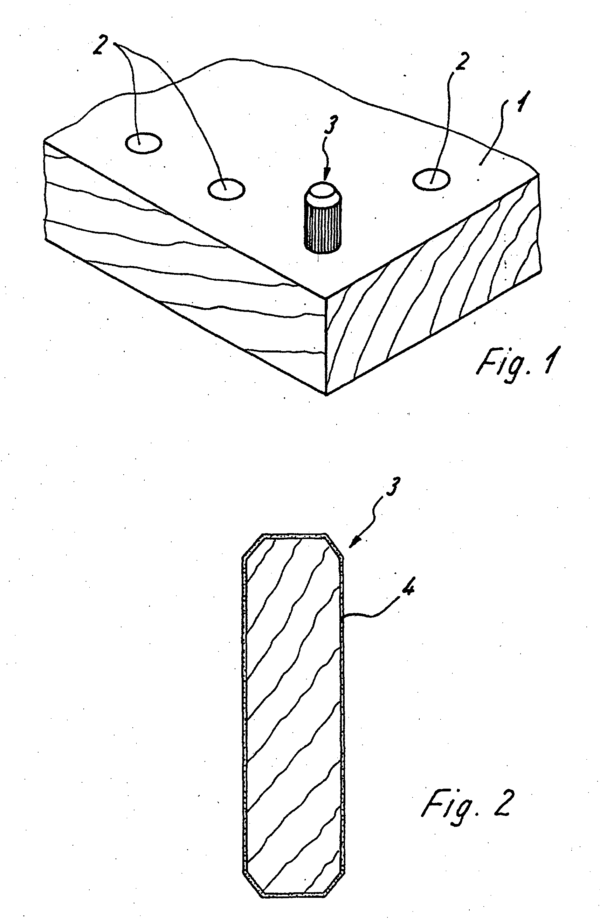

Ein Figur 1 dargestelltes Verbindungssystem besteht aus einer Möbelplatte 1, in der Bohrungen 2 vorgesehen sind. In eine der Bohrungen 2 ist ein Dübel 3 eingetrieben, der etwa zur Hälfte aus der Bohrung 2 herausragt. Der Dübel 3 ist im wesentlichen zylindrisch ausgebildet und besitzt eine geriffelte Oberfläche.

In Figur 2 ist der Dübel 3 im Schnitt dargestellt und es ist an der Außenseite eine Beschichtung 4 zu erkennen, die aus einer getrockneten Härter/Katalysator-Komponente eines mehrkomponentigen Leimsystems besteht.

Zur Verbindung zweier Möbelplatten wird zunächst eine wässrige Komponente des mehrkomponentigen Leimsystems in die gewünschte Bohrung 2 injiziert und anschließend der beschichtete Dübel 3 in die Bohrung 2 eingesteckt. Dadurch findet eine chemische Reaktion der beiden Komponenten mit einem gewissen Aufquellen statt, wodurch der Dübel 3 klemmend in der Bohrung 2 festgelegt wird. Das Aushärten kann schon nach kurzer Zeit, beispielsweise 12 bis 15 Sekunden erfolgen.

Anschließend kann der herausragende Teil des Dübels 3 mit einer Möbelplatte 1 mit Bohrungen 2 auf ähnliche Weise verbunden werden.

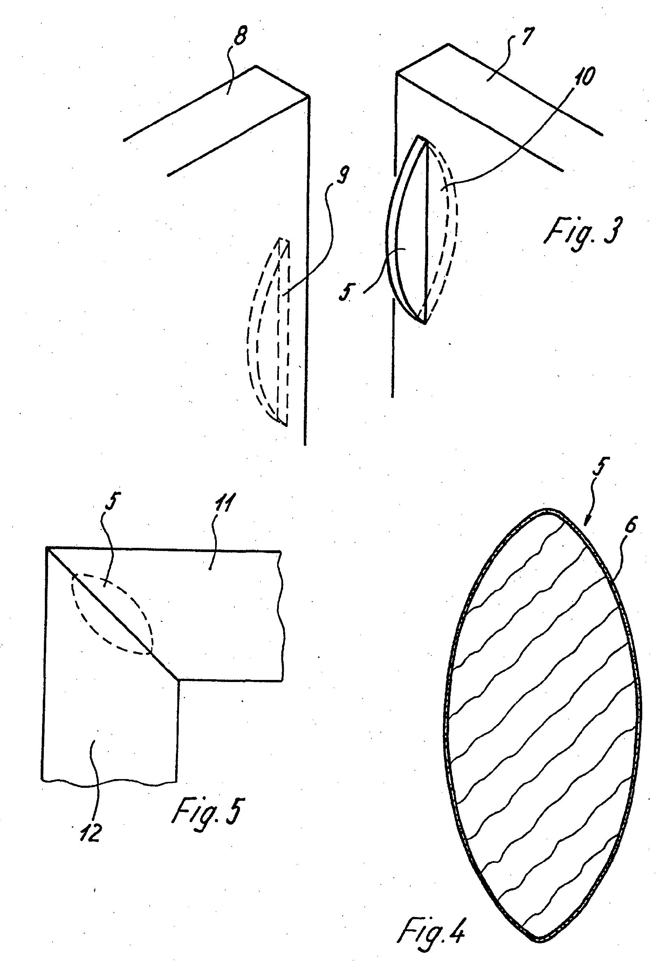

In Figur 3 ist ein Verbindungssystem gezeigt, bei dem an zwei Möbelplatten 7 und 8 eine Aussparung 9 bzw. 10 vorgesehen ist, in die ein Holzplättchen 5 mit etwa ovaler Form eingefügt wird. Das Holzplättchen 5 ist in Figur 4 im Detail dargestellt und an der Außenseite mit einer Beschichtung überzogen, die aus einer getrockneten Härter/Katalysator-Komponente eines mehrkomponentigen Leimsystems gebildet ist. Ähnlich wie bei dem ersten Ausführungsbeispiel wird die Aussparung 9 bzw. 10 mit einer anderen Komponente des mehrkomponentigen Leimsystems beschichtet, so dass bei Einfügen des Holzplättchen 5 in die angefeuchtete Aussparung 9 bzw. 10 eine chemische Reaktion stattfindet, so dass in kürzester Zeit eine Verbindung der Möbelplatten 7 und 8 hergestellt werden kann.

Bei dem in Figur 5 dargestellten Ausführungsbeispiel werden zwei Holzleisten 11 und 12 auf Gehrung geschnitten und im Gehrungsbereich mit Aussparungen versehen, in die ein Holzplättchen 5 eingefügt werden kann. Das Holzplättchen 5 ist wieder mit einer Beschichtung 6 einer getrockneten Härte/Katalysator-Komponente überzogen, während in den Aussparungen der Holzleisten 11 und 12 eine wässrige Komponente eines mehrkomponentigen Leimsystems vor dem Zusammenfügen injiziert wurde.

Statt den gezeigten Dübeln 3 und Holzplättchen 5 können die Verbindungsteile auch eine andere Geometrie besitzen und in entsprechende Aufnahmen bzw. Aussparungen an den Verbindungselementen eingefügt werden.

Als wässrige Komponente kann ein Harnstoff/Formaldehyd/Klebstoff, wie Weißleim in die Bohrungen 2 bzw. Aussparungen 9 injiziert werden.

Die Beschichtung 4 bzw. 6 kann zudem farblich ausgestaltet sein, so dass der Monteur auf den ersten Blick erkennt, dass das entsprechende Verbindungsteil eine Beschichtung besitzt, die Bestandteil eines mehrkomponentigen Leimsystems ist.

Bei einem Ausführungsbeispiel nach der vorliegenden Erfindung kommt ein Holzbearbeitungskleber der Produktklasse "Flüssiges UV-Harz" zum Einsatz. Dieser kann eine Zusammensetzung aus Harnstoff / Formaldehyd Copolymer in Wasser mit den Anteilen:
Formaldehyd: 0,2 - 1 %
Festharzgehalt: 60 - 75 %
und Wasser
aufweisen. Vorzugsweise beträgt der Festharzgehalt über 50%, insbesondere über 60%.

Der Dübel hingegen ist mit einem getrockneten säurehaltigen Katalysator bestehend aus organischen Säuren (schwefelhaltig), Harnstoff/Maleinsäure und ggf. Polyvinylacetat beschichtet. Beispielsweise wird folgende Zusammensetzung verwendet:
Amidosulfonsäure: 5 - 15 %
Maleinsäure: 10 - 25 %
Polyvinylacetat: 20 - 50 %
Wasser

Auch andere Zusammensetzungen können für die Bereitstellung eines Katalysators eingesetzt werden. Die Beschichtungen sind so gewählt, dass eine schnell herzustellende und ausreichend feste Verbindung erhalten wird.

## Patentansprüche

1. Verwendung eines Verbindungsteils (3, 5), insbesondere for die Herstellung von Möbeln aus Holz oder Holzwerkstoffen, wobei das Verbindungsteil (3, 5) zumindest teilweise mit einer getrockneten Härter/Katalysator-Komponente (4, 6) eines mehrkomponentigen Leimsystems beschichtet ist, mit einem Holzbearbeitungskleber mit einem Festharzgehalt über 50%.

2. Verwendung des Verbindungsteils nach Anspruch 1, **dadurch gekennzeichnet, dass** die Beschichtung (4, 6) des Verbindungsteils (3, 5) bei Kontakt mit ein oder mehreren anderen Komponenten des Leimsystems chemisch reagiert.

3. Verwendung des Verbindungsteils nach Anspruch 1 oder 2, **dadurch gekennzeichnet, dass** das Verbindungsteil (3, 5) über die gesamte Oberfläche etwa gleichmäßig dick beschichtet ist.

4. Verwendung des Verbindungsteils nach Anspruch 1 bis 3, **dadurch gekennzeichnet, dass** die Härter/Katalysator-Komponente mit einer sich von der Holzfarbe unterscheidenden Farbe eingefärbt ist.

5. Verwendung des Verbindungsteils nach Anspruch 1 bis 4, **dadurch gekennzeichnet, dass** das Verbindungsteil als Holzdübel (3) oder Holzplättchen (5) ausgebildet ist.

6. Verfahren zur Herstellung von Verbindungen, insbesondere für Möbel, mit den folgenden Schritten:
- Injizieren einer wässerigen Komponente eines mehrkomponentigen Leimsystems in Form eines Holzbearbeitungsklebers mit einem Festharzgehalt über 50% in eine Aufnahme (2, 9) eines Verbindungselementes (1, 8);
- Einfügen eines mit einer getrockneten Härte/Katalysator-Komponente beschichteten Verbindungsteils (3, 5) in die Aufnahme (2, 9) unter reaktiver Verbindung der beiden Komponenten, und Aushärten der hergestellten Verbindung.

7. Verfahren nach Anspruch 6, **dadurch gekennzeichnet, dass** die wässrige Komponente in der Aufnahme (2, 9) so feucht ist, dass die Feuchtigkeit zur Aktivierung der chemischen Reaktion durch die Beschichtung des Verbindungsteils (3, 5) aufgenommen wird.

8. Verfahren nach Anspruch 6 oder 7, **dadurch gekennzeichnet, dass** bei der Reaktion des mehrkomponentigen Leimsystems ein Aufquellen stattfindet und das Verbindungsteil (3, 5) zumindest teilweise klemmend in der Aufnahme (2, 9) festgelegt wird.

9. Verbindungssystem, insbesondere für Möbel aus Holz oder Holzwerkstoffen mit einer Verwendung eines Verbindungsteils (3, 5) nach einem der Ansprüche 1 bis 5 und einem Verbindungselement (1, 8) mit einer Aufnahme (2, 9) zum Einfügen des Verbindungsteils (3, 5) wobei in der Aufnahme (2, 9) zumindest teilweise eine andere Komponente als die Härter/Katalysator-Komponente des Verbindungsteils des mehrkomponentigen Leimsystems angeordnet ist.

10. Verbindungssystem nach Anspruch 9, **dadurch gekennzeichnet, dass** die andere Komponente aus Harnstoff/formaldehyd/Klebstoff, wie Weißleim gebildet ist.

## Claims

1. Use of a connection part (3, 5), in particular for the production of furniture from wood or wood-based materials, the connection part (3, 5) being at least partially coated with a dried hardener/catalyst component (4, 6) of a multi-component glue system, comprising a wood-working adhesive with a solid resin content of over 50%.

2. Use of the connection part according to Claim 1, **characterized in that** the coating (4, 6) of the connection part (3, 5) chemically reacts on contact with one or more other components of the glue system.

3. Use of the connection part according to Claim 1 or 2, **characterized in that** the connection part (3, 5) is coated more or less equally thickly over the entire surface.

4. Use of the connection part according to Claims 1 to 3, **characterized in that** the hardener/catalyst component is coloured with a colour differing from the colour of the wood.

5. Use of the connection part according to Claims 1 to 4, **characterized in that** the connection part is formed as a wooden peg (3) or small piece of wood (5).

6. Method for producing connections, in particular for furniture, comprising the following steps:
- injecting an aqueous component of a multi-component glue system in the form of a wood-working adhesive with a solid resin content of over 50% into a receptacle (2, 9) of a connection element (1, 8);
- inserting a connection part (3, 5) coated with a dried hardener/catalyst component into the receptacle (2, 9) while the two components undergo a reactive connection, and curing of the connection produced.

7. Method according to Claim 6, **characterized in that** the aqueous component in the receptacle (2, 9) is so moist that the moisture is absorbed by the coating of the connection part (3, 5) to activate the chemical reaction.

8. Method according to Claim 6 or 7, **characterized in that**, in the reaction of the multi-component glue system, a swelling takes place and the connection part (3, 5) is at least partially fixed in a clamping manner in the receptacle (2, 9).

9. Connecting system, in particular for furniture of wood or wood-based materials, involving use of a connection part (3, 5) according to one of Claims 1 to 5 and a connection element (1, 8) with a receptacle (2, 9) for inserting the connection part (3, 5), a component other than the hardener/catalyst component of the connection part of the multi-component glue system being at least partially arranged in the receptacle (2, 9).

10. Connecting system according to Claim 9, **characterized in that** the other component is formed from urea/formaldehyde adhesive, such as casein glue.

## Revendications

1. Utilisation d'un organe de liaison (3, 5) en particulier pour la fabrication de meubles en bois ou en matériaux à base de bois, cet organe de liaison (3, 5) étant au moins partiellement revêtu d'un composant durcisseur/catalyseur séché (4, 6) d'un système adhésif multi-composants comprenant une colle de traitement du bois ayant une teneur en résine solide supérieure à 50 %.

2. Utilisation de l'organe de liaison conforme à la revendication 1,
**caractérisée en ce que**
le revêtement (4, 6) de l'organe de liaison (3, 5) réagit chimiquement lors d'un contact avec un ou plusieurs autres composants du système adhésif.

3. Utilisation de l'organe de liaison conforme à la revendication 1 ou 2,
**caractérisée en ce que**
l'organe de liaison (3, 5) est recouvert avec une épaisseur essentiellement uniforme sur la totalité de sa surface.

4. Utilisation de l'organe de liaison conforme à l'une des revendications 1 à 3,
**caractérisée en ce que**
le composant durcisseur/catalyseur est colorié en une couleur différente de la couleur du bois.

5. Utilisation de l'organe de liaison conforme à l'une des revendications 1 à 4,
**caractérisée en ce que**
l'organe de liaison est réalisé sous la forme d'une cheville en bois (3) ou d'une plaquette en bois (5).

6. Procédé d'obtention d'organes de liaison en particulier pour des meubles comportant les étapes consistant à :
- injecter un composant aqueux d'un système adhésif multi-composants sous la forme d'une colle de traitement du bois ayant une teneur en résine solide supérieure à 50 % dans un évidement (2, 9) d'un élément de liaison (1, 8),
- introduction d'un organe de liaison (3, 5) recouvert d'un composant durcisseur/catalyseur séché dans l'évidement (2, 9) avec liaison réactive des deux composants et durcissement de la liaison obtenue.

7. Procédé conforme à la revendication 6,
**caractérisé en ce que**
le composant aqueux a une humidité telle dans l'évidement (2, 9) que cette humidité est recueillie pour activer la réaction chimique au travers du revêtement de l'organe de liaison (3, 5).

8. Procédé conforme à la revendication 6 ou 7,
**caractérisé en ce que**
lors de la réaction du système adhésif multi-composants, il se produit un gonflement, et l'organe de liaison (3, 5) est fixé au moins partiellement par serrage dans l'évidement (2, 9).

9. Système de liaison en particulier pour des meubles en bois ou en matériaux à base de bois, en utilisant un organe de liaison (3, 5) conforme à l'une des revendications 1 à 5 et un élément de liaison (1, 8) comportant un évidement (2, 9) pour l'insertion de l'organe de liaison (3, 5), selon lequel, dans l'évidement (2, 9) est positionné au moins partiellement un autre composant que le composant durcisseur/catalyseur de l'organe de liaison du système adhésif multi-composants.

10. Système de liaison conforme à la revendication 9,
**caractérisé en ce que**
l'autre composant est réalisé en une colle urée/formaldéhyde telle que la colle de caséine.
